Europäisches Patentamt

European Patent Office

Office européen des brevets

(19)

(11) Numéro de publication : **0 500 431 B1**

(12)

# FASCICULE DE BREVET EUROPEEN

(45) Date de publication du fascicule du brevet :
09.08.95 Bulletin 95/32

(51) Int. Cl.⁶ : **G01D 5/20,** G01P 3/48,
G01B 7/31

(21) Numéro de dépôt : **92400400.5**

(22) Date de dépôt : **14.02.92**

(54) **Capteur angulaire, notamment pour machines tournantes à très grande vitesse de rotation.**

(30) Priorité : **19.02.91 FR 9101964**

(43) Date de publication de la demande :
**26.08.92 Bulletin 92/35**

(45) Mention de la délivrance du brevet :
**09.08.95 Bulletin 95/32**

(84) Etats contractants désignés :
**CH DE GB IT LI SE**

(56) Documents cités :
**FR-A- 2 458 075**
**GB-A- 641 732**
**US-A- 4 752 732**
**IEEE TRANSACTIONS ON MAGNETICS vol.**
**25, no. 5, Septembre 1989, NEW YORK,US**
**pages 3827 - 3829; GUY LEMARQUAND: 'A**
**variable reluctance sensor'**
**PATENT ABSTRACTS OF JAPAN vol. 005, no.**
**186 (E-084)25 Novembre 1981**

(73) Titulaire : **SOCIETE DE MECANIQUE**
**MAGNETIQUE S.A.**
**Z.I. Vernon Saint-Marcel**
**F-27950 Saint-Marcel (FR)**

(72) Inventeur : **Schroder, Ulrich**
**8 Place de Tournefort**
**F-76230 Bois Guillaume (FR)**
Inventeur : **Brunet, Maurice**
**Le Bout aux Roussel**
**Sainte-Colombe, F-27950 Saint Marcel (FR)**

(74) Mandataire : **Thévenet, Jean-Bruno et al**
**Cabinet Beau de Loménie**
**158, rue de l'Université**
**F-75340 Paris Cédex 07 (FR)**

EP 0 500 431 B1

# Description

La présente invention concerne un capteur angulaire pour la mesure de la position angulaire d'un arbre tournant, utilisable notamment dans des machines-outils, des machines spéciales ou des machines tournantes industrielles fonctionnant à très grande vitesse de rotation.

Il existe une très grande variété de capteurs angulaires. On utilise ainsi de façon classique des résolveurs, des capteurs optiques ainsi que des capteurs inductifs, capacitifs ou à magnétorésistance. Chaque capteur possède des caractéristiques propres qui le font choisir de préférence à un autre.

On connait en particulier par l'article de Guy Lemarquand intitulé "A variable reluctance sensor" paru dans la revue IEEE Transactions on Magnetics, vol. 25, n° 5, de septembre 1989, pp. 3827-3829 un détecteur inductif de type radial à reluctance variable comprenant un ensemble d'électro-aimants disposés sans contact en regard de la périphérie d'un rotor en matériau ferromagnétique centré pour détecter l'angle de rotation d'un arbre tournant grâce à la création d'une variation sinusoïdale naturelle de l'entrefer.

Pour l'entraînement des broches d'usinage dans les machines-outils par exemple, et notamment dans le cas de broches à paliers magnétiques actifs entraînées par un moteur synchrone, il est indispensable de disposer, pour la commande de l'amplificateur de puissance du moteur synchrone actionnant la broche, d'une génératrice biphasée fonctionnant à l'arrêt. Les génératrices à rotor à aimant permanent ne sont pas utilisables à faible vitesse ou à l'arrêt et les résolveurs demandent une alimentation en porteuse du rotor que la vitesse de rotation élevée desdites broches, qui peut être de l'ordre de 200 m/s pour la vitesse linéaire maximum du rotor, rend délicate à mettre en oeuvre. En outre, l'outil doit pouvoir être arrêté dans une position donnée pour le changer, ce qui nécessite une linéarité meilleure que 1 % et un forage important, par exemple de l'ordre de 50 % du diamètre, pour ledit dispositif de changement d'outil.

L'invention a pour but de satisfaire les exigences précédentes que les systèmes classiques ne remplissent pas, en fournissant une mesure qui soit en outre insensible à la fois aux déplacements radiaux et axiaux de l'arbre tournant.

Ces buts sont atteints conformément à l'invention, grâce à un capteur angulaire, notamment pour machine tournante à très grande vitesse de rotation, comprenant au moins un moyen de détection comprenant un stator constitué de moyens électromagnétiques formant des détecteurs inductifs et un rotor excentré présentant à sa périphérie tournée vers le stator, un anneau en matériau ferromagnétique, caractérisé en ce qu'il comprend au moins un premier et un second moyen de détection, en ce que les rotors des premier et second moyens de détection sont montés excentrés dans des directions opposées sur un arbre tournant commun, et en ce que les bobinages desdits détecteurs inductifs constituent les différentes branches d'un montage en pont excitées par un signal unique à porteuse fourni par un générateur.

Les moyens électromagnétiques comprennent pour chacun des moyens de détection deux paires de détecteurs inductifs décalés angulairement de 90°.

L'invention concerne encore un système de commande de l'entraînement d'un moteur synchrone à aimants permanents entraînant un arbre tournant et comprenant un convertisseur de fréquence couplé au réseau d'alimentation et commandé par un modulateur en largeur d'impulsion dont les tensions de commande sont fournies, après passage dans un transformateur, par des régulateurs de courant influencés par la différence entre les consignes de courants et les courants obtenus après passage dans un transformateur, à partir des courants mesurés sur les phases du moteur, caractérisé en ce que lesdites consignes de courant sont élaborées, en fonction de la position angulaire de l'arbre tournant donnée par un circuit de traitement des signaux délivrés par un capteur angulaire selon l'une quelconque des revendications 1 à 5, depuis une valeur de consigne globale fournie par un régulateur de vitesse influencé par la différence entre une consigne de vitesse et la vitesse mesurée à partir dudit capteur angulaire.

Le dispositif selon l'invention est particulièrement simple, il ne présente aucun contact entre les parties rotorique et statorique, ce qui permet un fonctionnement silencieux, exempt de vibrations et l'absence de lubrification permet de mieux supporter l'ambiance polluée qui règne en général autour des machines-outils. Par ailleurs, la simplicité de l'électronique permet facilement de l'éloigner de cette ambiance polluée. L'absence de bobinage au niveau des parties rotoriques permet d'atteindre des vitesses de rotation élevées et le fait que le flux magnétique ne pénétre que de quelques millimètres dans les paquets de tôles des parties rotoriques, autorise la réalisation d'un forage important pour le capteur. En outre le dispositif, qui accepte un déplacement radial important, allonge peu l'arbre tournant et donc ne modifie que partiellement sa fréquence critique.

Le dispositif selon l'invention est tout-à-fait adapté pour être incorporé dans une machine tournante équipée d'une suspension magnétique active, elle-même associée à des paliers auxiliaires, qui entrent en action en cas de défaillance de la suspension magnétique ou d'une surcharge importante.

Les paliers auxiliaires sont nécessaires car les paliers magnétiques ne supportent pas de surcharges élevées, même sur une courte durée, comme les paliers mécaniques. Une surcharge importante des paliers magnétiques peut se produire par exemple en cas de rupture d'une ailette, pour une pompe turbomoléculaire à paliers magnétiques, ou en cas de rupture de la meule de rectification, pour une électrobroche de rectification montée sur paliers magnétiques. Lorsqu'ils entrent en action dans de telles circonstances, les paliers auxiliaires sont très sollicités et il est important de ralentir et d'arrêter la machine le plus rapidement possible.

Le capteur angulaire selon l'invention, est ainsi particulièrement utile lorsqu'il est appliqué à l'entraînement d'un moteur synchrone d'une machine motorisée à suspension magnétique. En effet, il est important que le convertisseur d'un moteur synchrone d'une électrobroche, d'une pompe turbomoléculaire ou de toute autre machine motorisée à suspension magnétique puisse être piloté par son convertisseur avec le couple maximum de freinage, et par conséquent que le détecteur angulaire soit, comme selon l'invention, capable de fonctionner parfaitement, même pendant la rotation souvent erratique du rotor suspendu par ses paliers auxiliaires, et que le signal puisse rester sinusoïdal sans harmoniques, ni erreur angulaire.

D'autres caractéristiques et avantages de la présente invention ressortiront de la description suivante, en référence aux dessins annexés, sur lesquels :

- la figure 1 représente un schéma de principe d'un capteur angulaire selon l'invention, vu selon un plan axial par rapport à l'arbre de rotation, qui contient un axe de référence Y correspondant à une première voie de mesure.
- la figure 2 est une vue schématique selon la flèche F de la figure 1, montrant en perspective cavalière le capteur angulaire de la figure 1, avec une représentation complète de la deuxième voie de mesure correspondant à un axe de référence X.
- la figure 3a montre la tension de sortie Uy aux bornes de la voie Y du capteur angulaire.
- la figure 3b montre la tension de sortie Ux aux bornes de la voie X du capteur angulaire.
- la figure 4 montre un exemple d'entraînement d'une machine synchrone à aimants permanents utilisant un capteur angulaire selon l'invention.

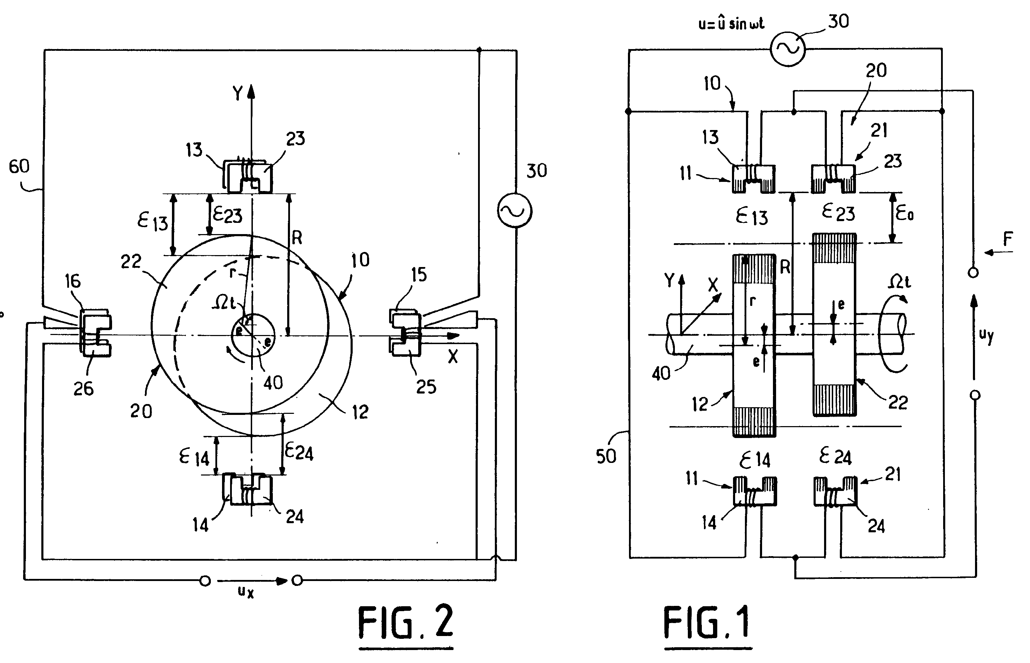

Il est maintenant fait référence aux dessins et en particulier aux figures 1 et 2 qui représentent les moyens de détection 10, 20 de la voie Y d'un capteur angulaire à 2 voies, selon des axes X et Y décalés de 90°. Chaque voie X ou Y comprend 2 moyens de détection 10,20. Pour la voie Y (fig.1), le premier moyen de détection 10 comporte d'une part un anneau en tôles minces ferromagnétiques, fixé sur l'arbre tournant 40 et constituant une première partie rotorique 12, et d'autre part deux détecteurs inductifs 13, 14 comprenant deux pièces magnétiques diamétralement opposées, supportant chacune un bobinage d'inductance, les détecteurs inductifs 13, 14 constituant une première partie statorique 11. Le second moyen de détection 20 comporte également d'une part un anneau en tôles minces ferromagnétiques fixé sur ledit arbre tournant 40, constituant une seconde partie rotorique 22, et d'autre part deux détecteurs inductifs 23, 24 comprenant deux pièces magnétiques diamétralement opposées, supportant chacune un bobinage d'inductance, les détecteurs inductifs 23,24 constituant une seconde partie statorique 21.

Les centres des paquets de tôles des première et seconde parties rotoriques 12, 22 sont décalés de manière opposée d'une distance e par rapport à l'axe de l'arbre tournant 40 (fig.1 et 2). L'entrefer moyen $\varepsilon o$ entre les parties rotoriques 12, 22 et statoriques 11, 21 peut être de plusieurs dixièmes de millimètre par exemple de 0,6 mm, lesdites parties rotoriques 12, 22 étant avantageusement constituées de fer-silicium.

Un montage en pont 50 permet d'assurer la liaison électrique entre les différents bobinages qui en constituent les différentes branches. Le bobinage du détecteur inductif 13 est relié en série au bobinage du détecteur 14, relié lui même en série au bobinage du détecteur 24, qui est lui-même relié au bobinage du détecteur 23, lui même relié en série au bobinage du premier détecteur 13. Un signal unique U(t) à porteuse, généralement de quelques kilohertz, par exemple de l'ordre de 20 kHz, émis par un générateur de type connu 30 vient exciter ledit pont entre d'une part les bobinages des détecteurs 13 et 14 du premier moyen de détection 10 et d'autre part les bobinages des détecteurs 23, 24 du second moyen de détection 20. Le signal de sortie Uy de la voie Y dudit capteur angulaire est recueilli entre d'une part les bobinages des détecteurs 13 et 23 et d'autre part les bobinages des détecteurs 14 et 24.

De manière analogue, les moyens de détection 10, 20 comprennent chacun une paire de détecteurs inductifs 15,16; 25,26 diamétralement opposés et alignés selon des directions X décalées de 90° par rapport à la direction Y (voir fig. 2), les bobinages des deux paires de détecteurs inductifs 15,16 et 25,26 étant montés en pont d'une façon analogue aux paires de détecteurs inductifs 13, 14 et 23, 24, en étant également alimentés par une sortie du générateur 30 et permettant de recueillir le signal de sortie Ux de la seconde voie X dudit capteur angulaire.

Si l'on revient à la voie Y, du fait de l'excentrement, par rapport à l'axe de l'arbre tournant 40, des paquets de tôles constituant les première et seconde parties rotoriques 12, 22, l'entrefer $\varepsilon$ existant entre les parties rotorique et statorique varie avec la rotation de l'arbre tournant 40. Si l'on appelle $\varepsilon 13$ L'entrefer existant entre la première partie rotorique 12 et la pièce magnétique du détecteur 13, $\varepsilon 14$ l'entrefer existant entre la première partie rotorique 12 et la pièce magnétique du détecteur 14, $\varepsilon 23$ l'entrefer existant entre la seconde partie rotorique 22 et la pièce magnétique du détecteur 23, $\varepsilon 24$ l'entrefer existant entre la seconde partie rotorique 22 et la pièce magnétique du détecteur 24, on peut montrer que lorsque l'excentrement e est très inférieur au rayon r de l'anneau des parties rotoriques 12 et 22, avantageusement dans un rapport 1 à 300, les entrefers suivent les équations suivantes :

$$\varepsilon 13 = \varepsilon o - e\cos\Omega t - y$$
$$\varepsilon 14 = \varepsilon o + e\cos\Omega t - y$$
$$\varepsilon 23 = \varepsilon o + e\cos\Omega t + y$$
$$\varepsilon 24 = \varepsilon o - e\cos\Omega t + y$$

$\varepsilon o$, l'entrefer moyen est égal à la différence entre R (rayon de forage de la partie statorique 11 ou 21) et r (rayon de l'anneau rotorique 12 ou 22). y est le déplacement radial selon l'axe Y de l'axe de l'arbre tournant 40. $\Omega$ est la pulsation de l'arbre tournant 40. La variation des entrefers provoque la variation des différents inducteurs des détecteurs 13, 14, 23 et 24 et corrélativement celle de la tension de sortie Uy de la voie Y du capteur angulaire lorsque celui-ci est excité par le générateur 30 fournissant le signal unique U(t) à porteuse. Lorsque l'excentrement e est à la fois inférieur à environ 5 fois l'entrefer moyen et supérieur au déplacement y de l'axe de l'arbre tournant 40, la tension de sortie Uy de la voie Y est donnée par l'expression suivante :

$$Uy = \frac{e}{\varepsilon o(1 + L^*)} U(t) \cos\Omega t$$

où $L^* = L\sigma/Lo$ est le rapport entre l'inductance de fuite et l'inductance modulable. Ce rapport est fixe, comme le sont les paramètres mécaniques e et $\varepsilon o$, mais influence fortement la sensibilité du dispositif. Toutefois, sous réserve de vérifier l'inégalité précédente, c'est à dire $y < e < 5\,\varepsilon o$, la tension de sortie Uy est indépendante des déplacements radiaux selon l'axe Y, de l'arbre tournant 40.

Pareillement, pour la seconde voie X, pour $e \ll r$ et si $x < e < 5\,\varepsilon o$ avec x déplacement radial selon l'axe X de l'axe de l'arbre tournant 40, on obtient :

$$Ux = \frac{e}{\varepsilon o(1 + L^*)} U(t) \sin\Omega t$$

Le paramètre $L^*$ est le même que précédemment et l'on retrouve une tension Ux indépendante des déplacements radiaux selon l'axe X de l'arbre tournant 40, mécaniquement décalé de 90° par rapport à l'axe Y.

Il en résulte, en définitive, un capteur peu sensible à une rotation excentrique constituant une génératrice biphasée synchrone à porteuse particulièrement adaptée pour être utilisé avec une moteur à aimant permanent comme il apparaîtra avec la description de la figure 2.

Les signaux Ux et Uy disponibles aux bornes du capteur angulaire présentent des formes identiques à celles des signaux d'un résolveur ce qui permet l'utilisation de circuits électroniques connus, comme par exemple le circuit 2S80 de Analog Device, qui assure la conversion des signaux analogiques de résolveur en signaux numériques.

L'angle de rotation de l'arbre tournant est fonction du rapport des tensions de sortie sur les 2 voies X et Y soit plus précisément :

$$\Omega t = \text{arc tg} \frac{Ux}{Uy}$$

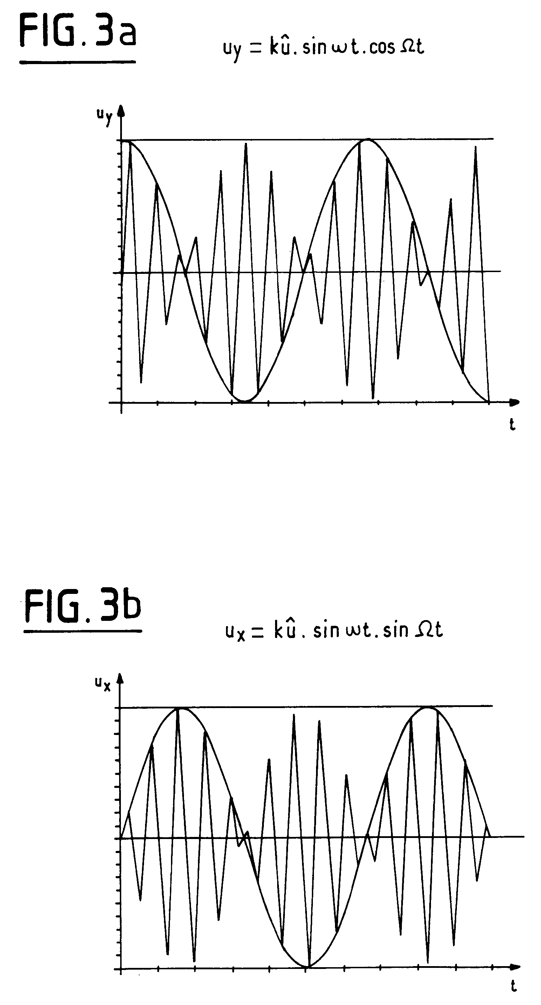

La figure 3a montre la forme du signal de sortie de la voie Y du capteur angulaire. Pour ce signal unique à porteuse U(t) de la forme $U \sin \omega t$, fourni par le générateur 30, on retrouve en sortie de la voie Y le même signal modulé à la fréquence de rotation de l'arbre tournant 40.

La figure 3b montre la forme du signal de sortie de la voie X du capteur angulaire qui présente un aspect analogue au précédent mais déphasé de 90°.

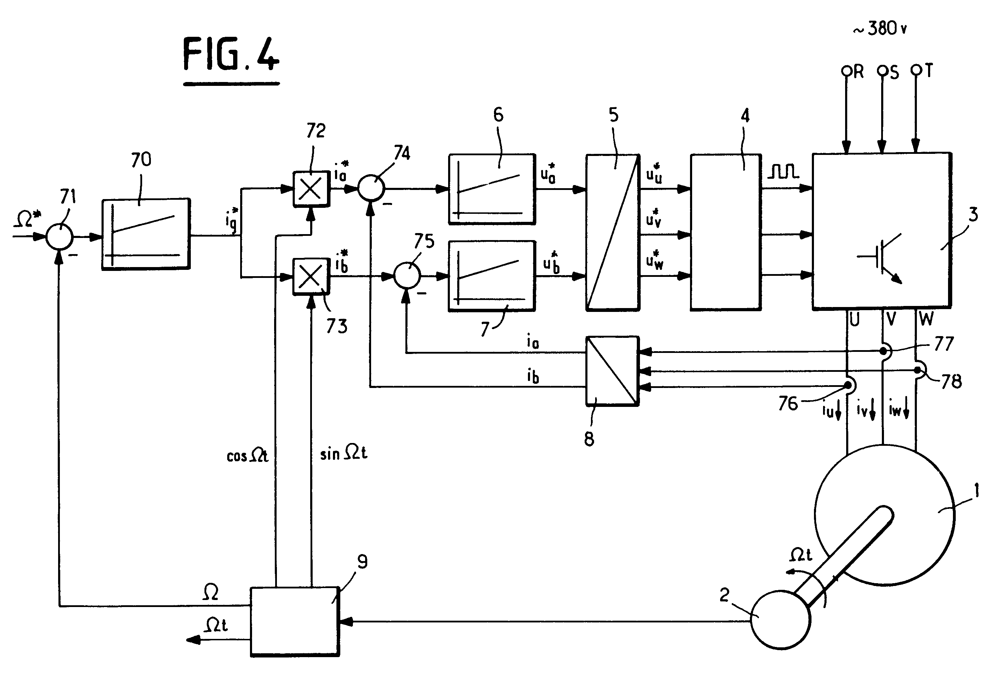

La figure 4 montre un exemple d'entraînement d'une machine synchrone à aimants permanents 1 utilisant un capteur angulaire 2. Contrairement aux systèmes à moteurs asynchrones, les systèmes d'entraînement à moteurs synchrones (par exemple à moteurs à aimants permanents de type samarium cobalt), à vitesse variable nécessitent le recours à un capteur angulaire. Afin d'obtenir un système d'entraînement stable, capable de fournir le couple maximal dans toute la plage de fréquences, y compris à l'arrêt, il est nécessaire de piloter le moteur en courant et d'appliquer les courants dans les trois phases en fonction de la position angulaire du rotor. Ainsi, à titre d'exemple, la consigne pour une boucle d'asservissement du couple du moteur 1 peut être donnée par le signal de sortie i*g d'un régulateur de vitesse 70, ce signal de sortie étant lui-même transformé à l'aide des informations fournies par un capteur angulaire 2 tel que le capteur angulaire décrit plus haut, en deux signaux sinusoîdaux qui constituent des valeurs de consignes i*a et i*b pour les courants dans les phases du moteur 1.

Le moteur synchrone à aimants permanents 1 est alimenté en courant, par le convertisseur de fréquence 3 qui constitue un étage de puissance couplé avec le réseau d'alimentation 380V alternatif (R, S, T). Le convertisseur de fréquence 3 est commandé par un circuit de commande 4 constitué d'un modulateur en largeur d'impulsion (PWM) dont les tensions de commande U*u, U*v, U*w sont fournies, au travers d'un circuit de transformation 5 par deux régulateurs de courant 6 et 7. Ceux-ci sont influencés par la différence obtenue dans les sommateurs 74,75 entre les valeurs de consigne précitées i*a et i*b et des valeurs ia et ib obtenues au travers d'un circuit de transformation 8, à partir de valeurs mesurées sur les deux ou trois phases du moteur 1 en des points 76, 77, 78.

Les valeurs de consigne i*a et i*b sont élaborées dans des circuits multiplieurs 72,73, en fonction de la position angulaire du rotor donnée par un circuit 9 de traitement des signaux fournis par un capteur angulaire 2 conforme à l'invention, et en fonction d'une valeur de consigne globale i*g fournie par le régulateur de vitesse 70 influencé par la différence fournie par un sommateur 71, entre une consigne de vitesse $\Omega^*$ et la vitesse mesurée $\Omega$ obtenue à partir du circuit 9.

Ce système d'entraînement garantit l'angle optimal entre les pôles du rotor et la distribution des courants statoriques pour toutes les vitesses du moteur synchrone, la modulation de la durée des créneaux délivrés par le circuit de commande 4 permettant d'obtenir, en sortie du convertisseur de fréquence 3, des signaux à peu près sinusoïdaux fonction de la position angulaire du rotor 40.

Le circuit 9 fournit l'information de vitesse de rotation avec précision et grande bande passante garantissant ainsi le bon comportement statique et dynamique de la boucle de vitesse. De plus, il est toujours possible, pour réaliser l'arrêt du rotor dans une position donnée, de prévoir une boucle de position supplémentaire.

Un moteur synchrone à aimants permanents associé à un capteur angulaire selon la présente invention peut notamment être appliqué à un système d'entraînement d'une broche d'usinage montée sur palier magnétiques actifs. Dans cette application, le système de commande du moteur synchrone peut rester parfaitement fiable bien que l'arbre porté par des paliers magnétiques puisse présenter une rotation excentrique, en particulier lors d'un atterrissage sur des paliers auxiliaires. Dans ce dernier cas, la présence d'un capteur angulaire selon l'invention insensible aux déplacements radiaux de l'arbre, garantit le bon fonctionnement du moteur synchrone agissant en frein.

## Revendications

1. Capteur angulaire, notamment pour machine tournante à très grande vitesse de rotation, comprenant au moins un moyen de détection (10, 20) comprenant un stator (11, 21) constitué de moyens électromagnétiques (13 à 16, 23 à 26) formant des détecteurs inductifs et un rotor (12, 22) excentré présentant à sa périphérie tournée vers le stator (11, 21), un anneau en matériau ferromagnétique, caractérisé en ce qu'il comprend au moins un premier et un second moyen de détection (10, 20), en ce que les rotors (12, 22) des premier et second moyens de détection (10, 20) sont montés excentrés dans des directions opposées sur un arbre tournant commun (40), et en ce que les bobinages desdits détecteurs inductifs (13 à 16, 23 à 26) constituent les différentes branches d'un montage en pont (50, 60) excitées par un signal unique à porteuse fourni par un générateur (30).

2. Capteur angulaire selon la revendication 1, caractérisé en ce que lesdits moyens électromagnétiques (13 à 16, 23 à 26) comprennent pour chacun des moyens de détection (10, 20) deux paires de détecteurs inductifs (13, 14; 15, 16; 23, 24; 25, 26) décalés angulairement de 90°.

3. Capteur angulaire selon l'une quelconque des revendications 1 et 2, caractérisé en ce qu'il comporte deux montages en pont (50, 60) pour déterminer l'angle de rotation $\Omega t$ de l'arbre tournant (40).

4. Capteur angulaire selon l'une quelconque des revendications 1 à 3, caractérisé en ce que lesdits détecteurs inductifs (13 à 16, 23 à 26) constituant les stators (11, 21) sont des détecteurs magnétiques constitués par des pièces en U en matériau ferromagnétique tel que de la ferrite, autour desquelles est enroulée une bobine d'induction.

5. Capteur angulaire selon l'une quelconque des revendications 1 à 4, caractérisé en ce que chaque montage en pont (50, 60), reliant entre eux les détecteurs inductifs (13, 14, 23, 24; 15, 16; 25, 26) orientés selon une même direction, fournit un signal de sortie (Uy, Ux) du capteur angulaire correspondant à ladite direction prédéterminée (Y, X).

6. Système de commande de l'entraînement d'un moteur synchrone à aimants permanents (1) entraînant un arbre tournant et comprenant un convertisseur de fréquence (3) couplé au réseau d'alimentation et commandé par un modulateur en largeur d'impulsion (4) dont les tensions de commande sont fournies, après passage dans un transformateur (5), par des régulateurs de courant (6 et 7) influencés par la différence entre les consignes de courants et les courants obtenus après passage dans un transformateur (8), à partir des courants mesurés sur les phases du moteur (1),
caractérisé en ce que lesdites consignes de courant sont élaborées, en fonction de la position angulaire de l'arbre tournant donnée par un circuit (9) de traitement des signaux délivrés par un capteur angulaire (2) selon l'une quelconque des revendications 1 à 5, depuis une valeur de consigne globale fournie par un régulateur de vitesse (70) influencé par la différence entre une consigne de vitesse et la vitesse mesurée à partir dudit capteur angulaire (2).

7. Système de commande selon la revendication 6, caractérisé en ce que l'arbre tournant entraîné par le moteur synchrone à aimants permanents (1) est monté sur une suspension magnétique active équipée de paliers auxiliaires.

## Patentansprüche

1. Winkelmeßvorrichtung insbesondere für drehende Maschinen mit sehr hoher Drehgeschwindigkeit, bestehend aus mindestens einem Erfassungsmittel (10, 20) mit einem Stator (11, 21), der aus elektromagnetischen Mitteln (13 bis 16, 23 bis 26) zur Bildung von Induktionsdetektoren besteht, und mit einem außermittigen Rotor (12, 22), der an seinem dem Stator (11, 21) zugewandten Umfang einen Ring aus ferromagnetischem Material aufweist,
dadurch gekennzeichnet, daß sie mindestens ein erstes und ein zweites Erfassungsmittel (10, 20) aufweist, daß die Rotoren (12, 22) des ersten und des zweiten Erfassungsmittels (10, 20) in entgegengesetzten Richtungen außermittig auf einer gemeinsamen drehenden Welle (40) sitzen, und daß die Wicklungen der genannten Induktionsdetektoren (13 bis 16, 23 bis 26) die verschiedenen Zweige einer Brückenschaltung (50, 60) bilden, die durch ein einziges, von einem Generator (30) abgegebenes Trägerwellensignal erregt werden.

2. Winkelmeßvorrichtung nach Anspruch 1,
dadurch gekennzeichnet, daß die genannten elektromagnetischen Mittel (13 bis 16, 23 bis 26) für jedes der Erfassungsmittel (10, 20) zwei Paare von Induktionsdetektoren (13, 14; 15, 16; 23, 24; 25, 26) umfassen, die im 90°-Winkel zueinander verschoben sind.

3. Winkelmeßvorrichtung nach einem der Ansprüche 1 und 2,
dadurch gekennzeichnet, daß sie zwei Brückenschaltungen (50, 60) aufweist, um den Rotationswinkel t der drehenden Welle (40) zu bestimmen.

4. Winkelmeßvorrichtung nach einem der Ansprüche 1 bis 3,
dadurch gekennzeichnet, daß die genannten Induktionsdetektoren (13 bis 16, 23 bis 26), die die Statoren (11, 21) bilden, Magnetdetektoren sind, die aus U-förmigen Stücken aus ferromagnetischem Material wie z. B. Ferrit bestehen, um die eine Induktionswicklung gewickelt ist.

5. Winkelmeßvorrichtung nach einem der Ansprüche 1 bis 4,
dadurch gekennzeichnet, daß jede Brückenschaltung (50, 60), die die in der gleichen Richtung ausgerichteten Induktionsdetektoren (13, 14; 15, 16; 23, 24; 25, 26) untereinander verbindet, ein Ausgangssignal (Uy, Ux) der Winkelmeßvorrichtung abgibt, das der genannten vorherbestimmten Richtung (Y, X) entspricht.

6. Steuersystem für den Antrieb eines Synchronmotors mit Dauermagneten (1), der eine drehende Welle antreibt und einen Frequenzwandler (3) aufweist, der an das Versorgungsnetz gekoppelt ist und durch einen Impulsbreitenmodulator (4) gesteuert wird, dessen Steuerspannungen nach Durchgang durch einen Transformator (5) von Stromreglern (6 und 7) abgegeben werden, die durch den Unterschied zwischen den Stromeinstellwerten und den Strömen beeinflußt werden, die man aus den an den Phasen des Motors (1) gemessenen Strömen nach Durchgang durch einen Transformator (8) erhält,
dadurch gekennzeichnet, daß die genannten Stromeinstellwerte in Abhängigkeit von der Winkelposition der drehenden Welle, die durch eine Schaltung (9) zur Verarbeitung der von einer Winkelmeßvorrichtung (2) nach einem der Ansprüche 1 bis 5 abgegebenen Signale bestimmt wird, aus einem Gesamteinstellwert entwickelt werden, der von einem Geschwindigkeitsregler (70) abgegeben wird, der durch den Unterschied zwischen einem Geschwindigkeitseinstellwert und der an der genannten Winkelmeßvorrichtung (2) gemessenen Geschwindigkeit beeinflußt wird.

7. Steuersystem nach Anspruch 6,
dadurch gekennzeichnet, daß die drehende Welle, die von dem Synchronmotor mit Dauermagneten (1) angetrieben wird, an einer aktiven magnetischen Aufhängung angeordnet ist, die mit Zusatzlagern ausgestattet ist.

**Claims**

1. Angle sensor, in particular for a rotary machine having a very high speed of rotation, comprising at least a first detection means (10, 20) comprising a stator (11, 21) constituted by electromagnetic means (13 to 16, 23 to 26) forming inductive detectors and an eccentric rotor (12, 22) having a ring of ferromagnetic material at its periphery facing the stator (11, 21), characterized in that it comprises at least first and second detection means (10, 20), in that the rotors (12, 22) of the first and second detection means (10, 20) are mounted eccentrically in opposite directions on a common rotary shaft (40), and in that the coils of said inductive detectors constitute different branches of a bridge circuit (50, 60) excited by a single carrier signal supplied by a generator (30).

2. Angle sensor according to claim 1, characterized in that said electromagnetic means (13 to 16, 23 to 26) comprise, for each of the detection means (10, 20), two pairs of inductive detectors (13, 14; 15, 16; 25, 26) that are angularly offset by 90°.

3. Angle sensor according to any one of claims 1 to 3, characterized in that it comprises two bridge circuits (50, 60) for determining the angle of rotation Ωt of the rotary shaft (40).

4. Angle sensor according to any one of claims 1 to 3, characterized in that said inductive detectors (13 to 16, 23 to 26) constituting the stators (11, 21) are magnetic detectors constituted by U-shaped pieces of ferromagnetic material such as ferrite with respective induction coils wound thereabout.

5. Angle sensor according to any one of claims 1 to 4, characterized in that each bridge circuit (50, 60) interconnecting the inductive detectors (13, 14, 23, 24; 15, 16; 25, 26) oriented in the same direction, provides an output signal (Uy, Ux) of the angle sensor corresponding to said predetermined direction (y, x).

6. System for controlling the drive of a permanent magnet synchronous motor (1) driving a rotary shaft and comprising a frequency converter (3) coupled to the supply network and controlled by a pulse width modulator (4) whose control voltages are supplied, after passing through a transformer (5), by current regulators (6 and 7) influenced by the difference between current reference values and the currents obtained after passing through a transformer (8) from the currents measured on the phases of the motor (1), characterized in that said current reference values are generated as a function of the angular position of the rotary shaft as given by a circuit (9) for processing the signals delivered by an angle sensor (2) according to any one of claims 1 to 5, from an overall reference value supplied by a speed regulator (70) influenced by the difference between a speed reference value and the speed measured from said angle sensor (2).

7. Control system according to claim 6, characterized in that the rotary shaft driven by the permanent magnet synchronous motor (1) is mounted on an active magnetic suspension fitted with auxiliary bearings.

EP 0 500 431 B1

$u = \hat{u} \sin \omega t$

FIG. 2

FIG. 1

# FIG. 3a

$$u_y = k\hat{u} \cdot \sin \omega t \cdot \cos \Omega t$$

# FIG. 3b

$$u_x = k\hat{u} \cdot \sin \omega t \cdot \sin \Omega t$$

FIG. 4